# EUROPEAN PATENT SPECIFICATION

(11) **EP 4 082 921 B1**
(45) Date of publication and mention of the grant of the patent: **21.02.2024**
(21) Application number: 22170426.5
(22) Date of filing: 28.04.2022
(51) Int. Cl.: B65B 5/06, B65B 5/10, B65G 47/08

(54) **A CONTAINING APPARATUS OF GROUPS OF PACKAGES, A METHOD AND A SYSTEM**
VORRICHTUNG DIE GRUPPEN VON VERPACKUNGEN ENTHÄLT, VERFAHREN UND SYSTEM
APPAREIL CONTENANT DES GROUPES D'EMBALLAGES, PROCÉDÉ ET SYSTÈME

(30) Priority: 30.04.2021 IT 202100011021
(43) Date of publication of application: 02.11.2022
(73) Proprietor: Tiber Pack S.p.A., 52037 Sansepolcro (AR) (IT)
(72) Inventor: CECI, Maurizio, 52037 Sansepolcro (AR) (IT)
(74) Representative: Dall'Olio, Christian

(56) References cited:
- EP-B1- 2 894 102
- US-A- 4 070 960
- US-A- 4 398 383
- US-A1- 2008 142 398

## Description

The present invention relates to the sector of the packing of articles and, in detail, the sector of packaging of groups of packages with automatic machines. Such automatic packaging machines are generally known e.g. from document EP 2 894 102 B1.

More specifically, the invention relates to a containing apparatus of groups of packages, or bundles, of a method for arranging the apparatus and of a packaging system comprising the apparatus, such as for example a boxing system of packages.

The technical term "bundle" is used to identify a group of packages, ordered and compacted, i.e. which occupy a predetermined volume such, for example, as to appear in the shape and dimensions that are adequate to be included in a packaging.

The packaging is often in the form of a rectangular parallelepiped, so the group of packages frequently assumes this shape. The dimensional or shape conditions of the bundle must be guaranteed whatever the type of the single packages of the bundle. These can be flexible, for example *doypacks,* rectangular-bottom or cushion sachets, or can be rigid, for example cases, trays or bottles.

The packages of articles are often grouped together to form one or more rows so as to be arranged together internally of a casing, typically a box or case. The number of packages mainly depends on the size of the box, as can be seen in figures from 4 to 9. The packages are first ordered, obtaining a group of packages arranged in one or more rows, and then the group is moved internally of the casing. These operations can take place with differing modalities and further intermediate or parallel operations may take place. The packages of the bundle must be confined and maintained compact in the desired positions during the course of the operations to when the group of packages is picked up and placed in the packaging. In other words it is necessary to maintain the packages of the bundle internally of predetermined volumes, which can vary during the course of the various operations, for example by further compacting the packages.

Figures from 1 to 3 illustrate a containing apparatus of groups of packages of the prior art and an operating sequence that includes the inlet of the packages according to a first direction, the containing of the packages and the outlet of the packages according to a second direction. During the containing process of the packages, the row of packages is maintained between a first part and a second part so that the packages remain vertical and compact; the packages might further be compacted among one another. The first part and the second part exit respectively from a first slot and from a second slot made on a support plane (A) which supports the packages. The first part and the second part are movable between an extracted position, in which they exit above the support plane (A) and contain the packages in a predetermined volume, and a retracted position, in which they allow the movement and/or the gripping of the group of packages by other devices.

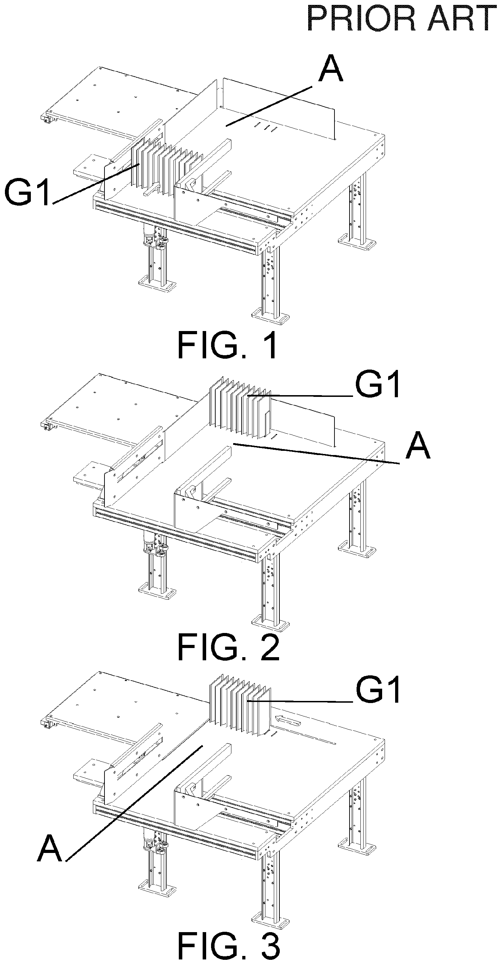

Other movable parts can be included to further contain the packages, for example figure 1 includes a third part arranged perpendicularly with respect to the first part and the second part.

Usually a same line or system of packaging successively processes bundles of various sizes, with the consequent need to adjust the bundle forming plane.

Figure 1 illustrates a plurality of first slots internally of which the first part can be located, so as to enable the containing apparatus to adjust for different predetermined volumes, i.e. for different sizes of bundles, for example with rows with a number of packages that are different and/or with a different arrangement. The processing of a new size of bundle by the containing apparatus requires a mechanical cutting operation of the support plane (A), which needs prolonged time and system downtime. To this can be added the need to locate the first part internally of another slot of the plurality of first slots or internally of a specially-made new first slot. With a plurality of first slots, the risk of jamming of the packages increases and weakens the support plane (A).

The same issues emerge, in a more accentuated way, when the number of rows in which the packages are arranged varies.

As can be observed in the apparatus of figures from 1 to 3, the first part is usually smaller in size than the second part; this can be useful for reducing the extension along the first direction of the plurality of slots and/or to facilitate the movement of the gripping means and/or to enable contact of the package, or packages, closest to the first part by the compacting means of the packages and/or to enable the translation of a row of the bundle into the containing position. It is advantageous for the first part to be central, according to the first direction, with respect to the package/s towards which it faces. This configuration is not guaranteed in the case of a size change: for example, taking as reference the case of figure 1, with wider packages the first part would be closer to the side of the packaging facing towards the third part.

A first aim of the present invention is to obviate the drawbacks of the prior art.

A second aim is to provide a containing apparatus which adapts to the specific needs of packaging of the bundle, for example in terms of dimensions of the packages, number of packages per row and number of rows.

Other aims of the invention are to minimise or avoid long machine downtimes for realising new sizes and to minimise the risk of jamming of the packages.

Further, an aim of the invention is to provide a packaging system that is especially flexible.

These and other aims, which will be obvious to the expert in the sector from a reading of the following text are attained by means of a containing apparatus of groups of packages according to claim 1, of a method for arranging the apparatus according claim 11 and a packaging system according to claim 12.

In accordance with the teachings of the present document, the containing apparatus of groups of packages in transit, with the packages arranged in at least a row, comprises a support for supporting a group of packages with the packages arranged in at least a row, a first part for contacting packages, a second part for contacting packages, first movement means and second movement means.

The support comprises a first support part having a first slot and a second support part having a second slot.

The first movement means move the first part between and extracted position, in which the first part exits superiorly from the support through the first slot, and a retracted position and vice versa.

Likewise, the second movement means move the second part between an extracted position, in which the second part exits superiorly from the support through the second slot, and a retracted position and vice versa.

The first slot and the second slot are arranged in such a way that the first part and the second part contains, i.e. confines, in a predetermined volume, at least a row of the group of packages in the respective extracted positions.

The first movement means and the second movement means are configured to move the first part and the second part on the basis of the transit of the group of packages.

The first support part is advantageously raised with respect to the second support part, or vice versa, and the first support part is movable with respect to the second support part according to an adjustment direction, between a first position and a second position, so as to vary the distance between the first slot and the second slot, on the basis of the predetermined volume. Further, the second support part exits from the second slot towards the first slot so that the first support part covers the second support part, or vice versa, in both the first position and the second position. Further, the containing apparatus comprises a movement device which moves the first part and the first support part so that they perform the same displacements along the adjustment direction.

With the teachings of the invention, a compartment is provided with a predetermined volume that is modifiable on the basis of specific requirements. Owing to the mobility along the adjustment direction, it is possible to modify the distance between the first part and the second part. Some embodiments enable further adjusting the compartment to the characteristics of the group of packages, for example by guaranteeing the positioning of the first part at the centre of the package/s that it contacts.

Specific embodiments of the invention of the apparatus of the invention, as well as the method and the system of the invention, will be described in the following part of the present description, according to what is set down in the claims and with the aid of the accompanying figures, in which:
- figures from 1 to 3 illustrate, with axonometric views, successive steps in which the packages are moved internally of a containing apparatus of groups of packages of the prior art;
- figures from 4 to 6 illustrate examples of groups of packages respectively with a row of 10 packages, a row of 12 packages and two rows of 10 packages;
- figures from 7 to 9 illustrate examples of boxes arranged to accommodate groups of packages according to figures from 4 to 6.;
- figures 10 and 11 are axonometric views of an embodiment of the containing apparatus according to the invention with groups of packages that are different to one another;
- figure 12 illustrates an example of a group of packages in a row of two stacks of packages;
- figures from 13 to 15 are views from above of the embodiment of figure 10 in successive steps of a possible movement of a group of packages;
- figure 16 is an axonometric view with a detail of figure 15;
- figure 17 is an axonometric view of the embodiment of figure 10 in the same step as in figure 16 but with a different group of packages;
- figure 18 is an axonometric view from below of the embodiment of figure 10;
- figure 19 illustrates some elements of the containing apparatus according to the invention;
- figure 20 is a view from above of some elements of the containing apparatus according to the invention complete with the trace of the cutting plane of the following figure;
- figure 21 is a section view of figure 20;
- figure 22 is a view from above of some elements of the containing apparatus according to the invention in successive operating steps, with the use of different line thicknesses;
- figure 23 and figure 24 are axonometric views of some elements of the containing apparatus according to the invention;
- figure 25 illustrates a frontal view of an embodiment of a packaging system according to the invention;
- figures 26 and 27 are axonometric views of another embodiment of a packaging system according to the invention;
- figure 28 is a view from above of the embodiment of figure 26 in a successive operating step;
- figure 29 is an axonometric view of the embodiment of figure 26 in an operating step subsequent to that of figure 28;
- figure 30 and figure 31 show, from different points of view, axonometric views of a movement device visible in figures 10, 25 and 26.

With reference to the appended figures, reference numeral 10 denotes a containing apparatus of groups of packages (G1, G2, G3, G4) in transit, with the packages arranged in at least a row. Typically, though not exclusively, for moving the groups of packages (G1, G2, G3, G4), translators or translator-compactors (4) are used, as better exemplified in the following. The packages of the group of packages G1, G2, G3, G4) are often drawn in support but can also be raised, for example with aspirating heads or suction cups.

Usually the groups of packages (G1, G2, G3, G4) are first moved into a containing position, internally of a predetermined volume, and thus towards a following station, for example of packing or boxing. Sometimes a first portion of the group of packages (G1, G2, G3, G4) is further moved before the arrival of the second portion of the group of packages (G1, G2, G3, G4), for example in order to orientate it differently.

An embodiment of the containing apparatus (10) comprises a support (11, 12, 121, 122), to support a group of packages (G1, G2; G3, G4) with the packages arranged in at least a row, a first part (21) for contacting packages, first movement means (61) for moving the first part (21), a second part (22) for contacting packages, second movement means (62) for moving the second part (22) and a movement device (3).

The support (11, 12, 121, 122) comprises a first support part (11) having a first slot (13) and a second support part (12) having a second slot (14). Both the first support part (11) and the second support part (12) are configured to support a group of packages (G1, G2, G3, G4), i.e. they form together a support surface which, according to the teachings of the present invention, can be more or less extended.

The first movement means (61) which move the first part (21) between an extracted position, in which the first part (21) exits superiorly from the support (11, 12, 121, 122) through the first slot (13), and a retracted position and vice versa; in particular the first part (21) exits from the first support part (11).

The second movement means (62) move the second part (22) between an extracted position, in which the second part (22) exits superiorly from the support (11, 12, 121, 122) through the second slot (14), and a retracted position and vice versa; in particular the second part (22) exits from the second support part (12). The first slot (13) and the second slot (14) are arranged in such a way that the first part (21) and the second part (22) contain, in a predetermined volume, at least a row of the group of packages (G1, G2; G3, G4) in the relative extracted positions. In other words the first part (21) and the second part (22) are arranged at a predetermined distance to confine at least a row of a specific bundle, i.e. so as to prevent undesired displacements such as, for example, significant misalignments or falls of the packages.

The first movement means (61) and the second movement means (62) are configured to move the first part (21) and the second part (22) on the basis of the transit of the group of packages (G1, G2, G3, G4).

The first support (11) is advantageously raised with respect to the second support part (12), or vice versa, the second support part (12) is raised with respect to the first support part (11). Further, the first support part (11) is movable with respect to the second support part (12) according to an adjustment direction (R), between a first position and a second position, so as to vary the distance between the first slot (13) and the second slot (14), on the basis of the predetermined volume, essentially on the basis of the length of the at least a row. Further, the second support part (12) exits from the second slot (14) towards the first slot (13) so that, in both the first position and the second position, the first support part (11) covers the second support part (12) or vice versa, the second support part (12) covers the first support part (11). The second case arises when the second support part (12) is raised with respect to the first support part (11).

Further, the movement device (3) is configured to move the first part (21) and the first support part (11), so that they perform the same displacements along the adjustment direction (R).

It is thus possible to vary the dimensions of the compartment which is formed between the first part (21) and the second part (22) so as to be able to adjust the containing apparatus (10) to groups of packages (G1, G2; G3, G4) that are different to one another. The containing apparatus (10) of the invention thus enables a rapid size change and one which can be easily controlled; further, it limits operator interventions, for example by requesting the replacement of the first support part (11) only when the difference between the formats is significant. A like apparatus can therefore be advantageously operated automatically or semiautomatically on the basis of the characteristics of the group of packages (G1, G2, G3, G4) and can be easily integrated in a packaging system or a packaging line. The mobility between the first part (21) and the second part (22) can also be exploited to compact the packages with one another in the compartment.

Though the main adjustment allowed by the containing apparatus (10) of the invention regards the distance between the first part (21) and the second part (22), further adjustments are possible to adapt the compartment to the characteristics of the group of packages (G1, G2, G3, G4), as will be illustrated in the following. Further, the adjustment of the invention can be continuous and not discrete, as occurs when cuts are made in the support plane (A).

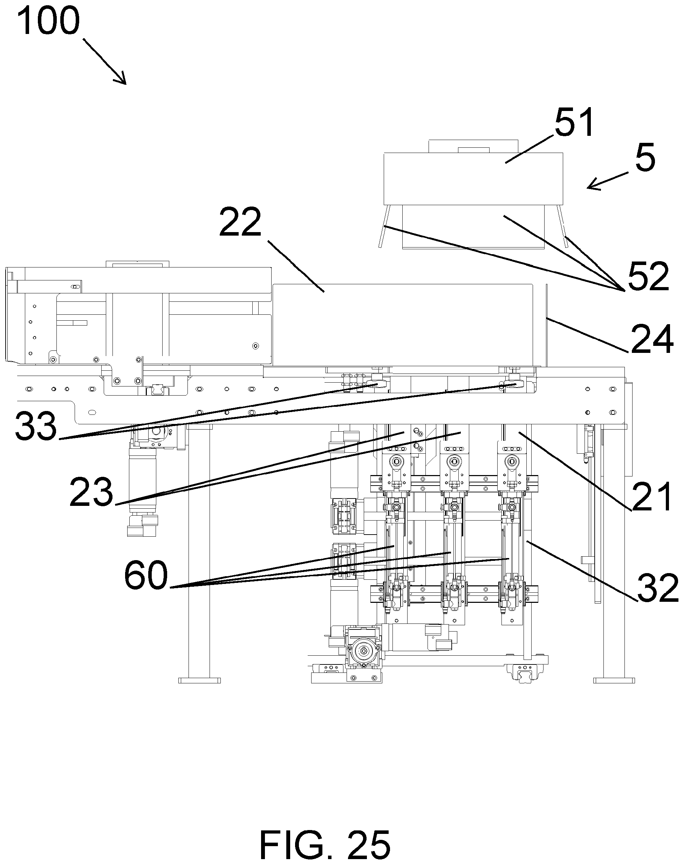

The first part (21) and the second part (22) are configured to contact the packages by a vertical portion so as to enable containment thereof, and in the embodiments of the appended figures are strips. Usually the first part (21) and the second part (22) extend vertically, preferably perpendicularly to the support (11, 12, 121, 122) The movement of the first part (21) and the second part (22) is coordinated with the inlet and outlet of the group of packages (G1, G2, G3, G4) from the compartment, which can take place with varies modalities, according to the specific needs. A non-limiting example of coordination is shown in figures from 1 to 3 and in figures from 13 to 16. A further example can be derived from a viewing of the packaging system (100) of figure 25. Greater detail about the pick-up and moving means (5) will be provided in the following: downstream of the lowering of the head (51), the abutment parts (52) contact the packages after the first part (21) and the second part (22) pass into the retracted position.

The first part (21) and the second part (22) in retracted position are preferably below the upper surface of the support (11, 12, 121, 122) but can also free the packages only partially, as much as is necessary for the movement thereof.

The mobility between the first support part (11) and the second support part (12) enables adjusting the distance thereof so as to keep the group of packages (G1, G2, G3, G4) in the best way, even when the group is unstable, for example because the packages have a certain degree of flexibility and are arranged vertically, i.e. standing up, or are arranged horizontally but form vertical stacks. A certain degree of flexibility is present, for example, in the case of packages produced from film and with the contents in the liquid state, powder state or in any case deformable, so that they can billow under their own weight if not maintained confined and compacted.

The first support part (11) and the second support part (12) preferably have flat support surfaces; more preferably, the first part (21) and the second part (22) are moved in a perpendicular direction to the support surfaces.

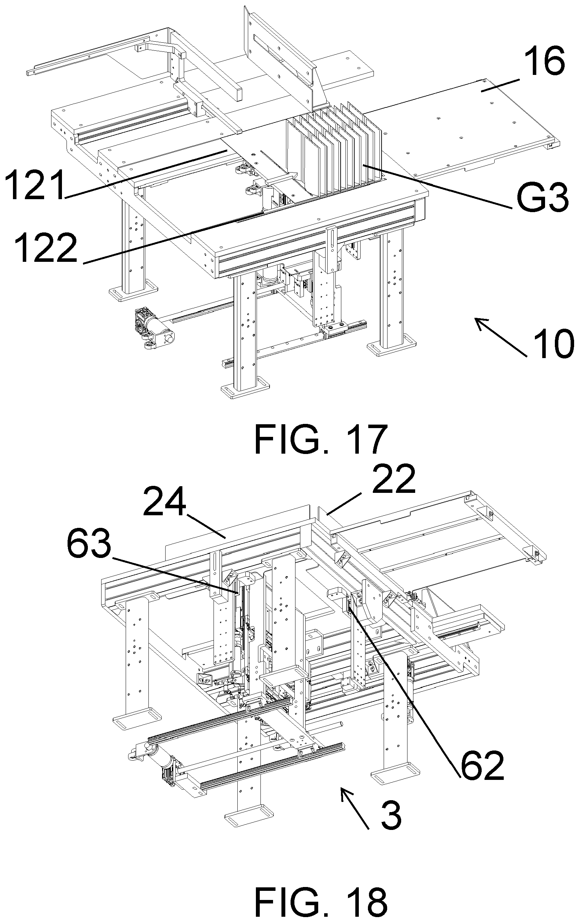

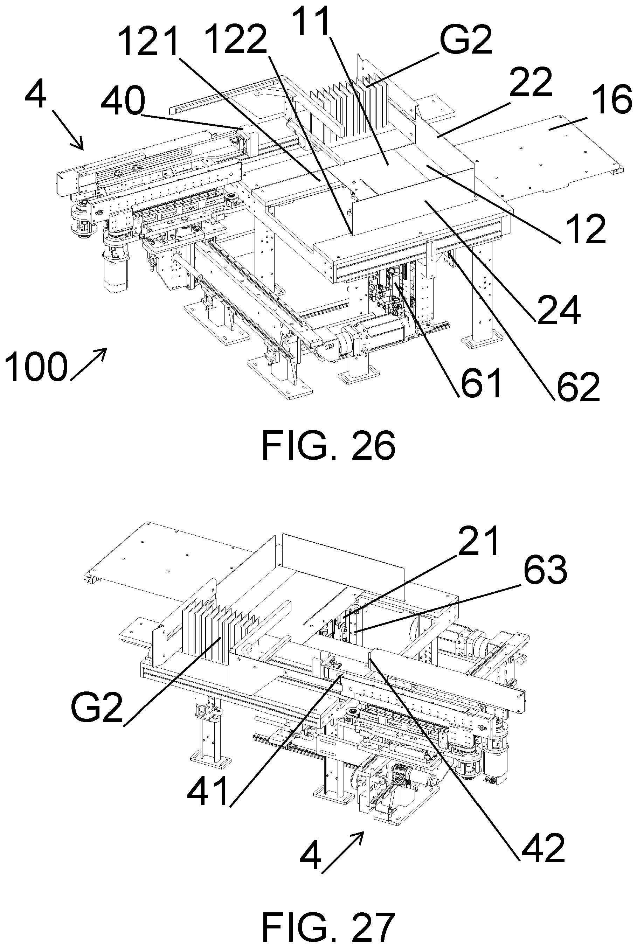

The support (11, 12, 121, 122) preferably comprises two lateral parts (121, 122) which extend according to the adjustment direction (R) and which are spaced apart from one another, wherein the first support part (11) is raised with respect to the second support part (12) and to the two lateral parts (121, 122) and wherein the first slot (13) is positioned between the two lateral parts (121, 122). This configuration, observable for example in figures 17 and 26, improves the support of the first support part (11) because the two lateral parts (121, 122) limit the lowering thereof under the weight of the packages, even when the first slot (13) and the second slot (14) are more distant. This enables, among other things, use of a first support part (11) having a reduced thickness, typically made of sheet metal, without the packages in transit causing significant deformations. In this way it is also possible to reduce the step between the first support part (11) and the second support part (12), thus making the following movement of the packages for example in the step illustrated in figure 17 easier.

The movement device (3) preferably bears the first part (21).

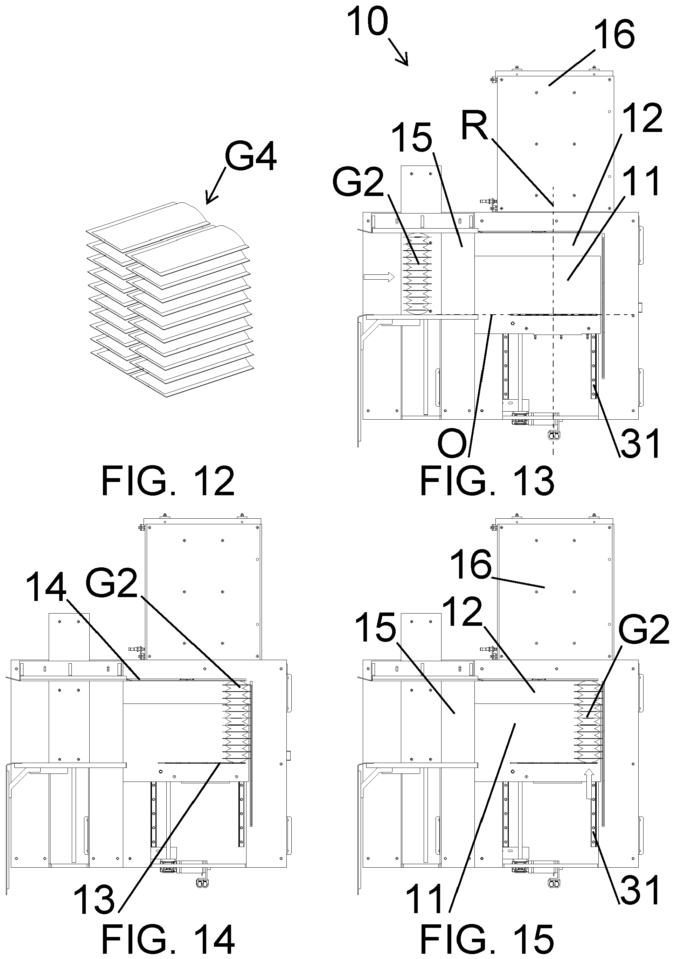

The movement device (3) preferably comprises a support structure (32) and a linear guide (31). The linear guide (31) bears the support structure (32) which in turn bears the first part (21). The linear guide (31) is arranged along the adjustment direction (R) so that the first part (21) is movable in the adjustment direction (R). This can be observed, for example, in figure 13, where the linear guide (31) is fixed to the floor surface to which the legs supporting the second support part (12) are fixed.

Further, the movement of the support structure (32) along the adjustment direction (R) causes the movement of the first support part (11) along the adjustment direction (R); the following contains two preferred alternatives for obtaining this effect which facilitates the management of the containing apparatus (10) and simplifies the construction of the movement device (3).

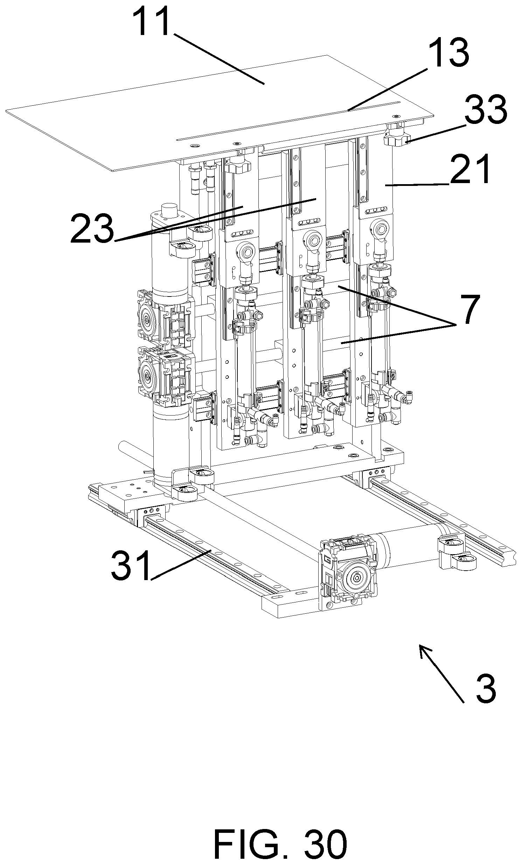

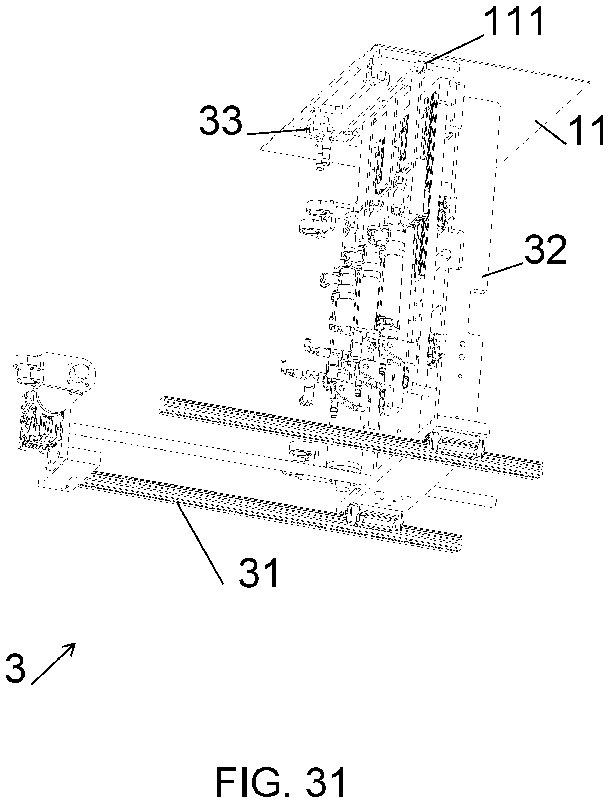

In a first alternative the support structure (32) bears the first support part (11) so as to move the first support part (11) along the adjustment direction (R). For example, in the embodiment visible in figures 30 and 31, the first support part (11) is supported on the support structure (32) and is removably connected thereto by means of threaded connections, the knobs (33) of which can be clearly seen. As will be illustrated in the following, the two knobs (33) also allow replacement of the first support part (11), both for reasons of maintenance and in order to process dimensions of the group of packages (G1, G2, G3, G4) that are very different from one another.

In a second alternative embodiment, the first support part (11) rests on the second support part (12) and on the two lateral parts (121, 122) and has a first thickness (111) at the first slot (13) for contacting the first part (21). The first part (21) is configured to be internal of the first thickness (111) when the movement device (3) moves the first support part (11), in order to transfer the motion to the first support part (11).

The first thickness (111) is more preferably larger than the remaining thickness of the first support part (11) so as to reinforce the first slot (13) and/or to guide the first part (21). This size increase facilitates the movement of the first support part (11) when the first part (21) is in the retracted position. For example, as figure 31 illustrates the movement of the first support part (11) might take place, should the first support part (11) not be connected by means of the threaded connections, owing to the contact between the first part (21) in the retracted position and two overlaps of material immediately below the edges of the first slot (13). The second alternative is obtainable by adapting the version illustrated in figure 31, i.e. by not connecting the first support part (11) to the support structure (32) and placing the first support part (11) in support.

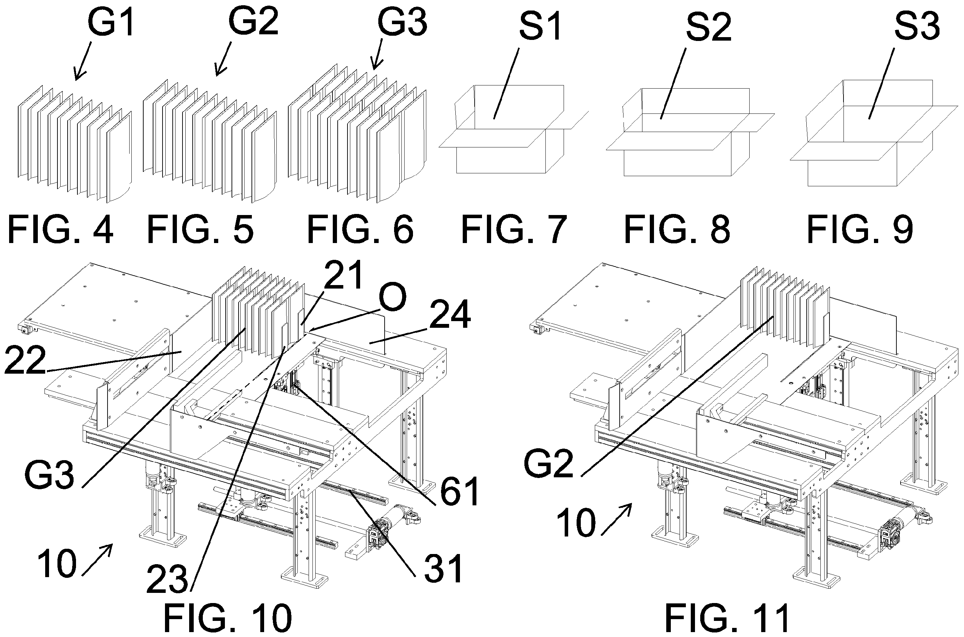

The first slot (13) preferably extends along a perpendicular direction (O), which is perpendicular to the adjustment direction (R), so as to enable the displacement of the first part (21) in the perpendicular direction (O), and the first part (21) is movable along the perpendicular direction (O) with respect to the first support part (11) and, in the embodiments of the appended figures, with respect to the support structure (32). In this way it is possible to adjust the position of the first part (21) so that it is centred with respect to the package or packages towards which it faces or is in contact with, as can be seen for example in figure 10.

The first slot (13) preferably extends along a perpendicular direction (O), which is perpendicular to the adjustment direction (R) and the containing apparatus (10) comprises at least a further part (23) for contacting packages which is movable between an extracted position, in which it exits superiorly from the support (11, 12, 121, 122) through the first slot (13), and a retracted position; in particular the at least a further part (23) exits from the first support part (11). The containing apparatus (10) then comprises movement means for the at least a further part (23) which can be alike to the first movement means (61), as in the case of figure 25. The at least a further part (23) is more preferably movable along the perpendicular direction (O). As can be observed in figure 10, the presence of at least a further part (23), and the possible mobility thereof in the perpendicular direction (O), for example on a linear guide associated to the support structure (32), enables adjusting the containing apparatus (10) for further sizes which have several rows. This enables, for example, arranging the first part (21) and the at least a further part (23) in a median position with respect to the respective row, instead of using a longer first part (21).

The second part (22) can also comprise a plurality of portions and, possibly, one or more third parts (24) can be included in the event that it is desired to contain the group of packages (G1, G2, G3, G4) also on the other sides. Generally also each of the one or more third parts (24) is movable between an extracted position, in which it exits superiorly from the support (11, 12, 121, 122) via a slot, and a retracted position; typically this mobility is coordinated with the inlet and outlet of the group of packages (G1, G2, G3, G4) from the compartment.

By comparing figure 1 with figures 10 and 11, in the light of what is described above, the advantages deriving from the use of a containing apparatus (10) according to the invention emerge clearly. By way of example, on the basis of the characteristics of the packages, the operator initially sets, on the recipe in the control unit of the containing apparatus (10), for example a PLC, a distance between the first part (21) and the second part (22) and, possibly, the at least a further part (23) which ensures the maintaining of all the packages of a group of packages (G1, G2, G3, G4) internally of a volume. This guarantees, for example, the subsequent entry of the group of packages (G1, G2, G3, G4) into a box (S1, S2, S3).

On the basis of the memorised data, or of a new setting, on each size change, the containing apparatus (10) adjusts the height of the correct position, on the basis of the setting included on the recipe and by means of an automated system for the positioning. The method for arranging a containing apparatus (10), illustrated in the following, further clarifies the operation of the containing apparatus (10).

Though the packages can reach the containing apparatus (10) and move away from the containing apparatus (10) with differing modalities, it is common practice for the packages to be moved while keeping them in contact inferiorly, for example by displacing them with the translator-compactor (4) illustrated in the following. Figures from 13 to 15 shows a typical sequence of movement with the packages maintaining contact inferiorly. For this reason it is preferable for the various parts to be mutually positioned in such a way as to prevent jamming of the packages.

The containing apparatus (10) preferably comprises a first support (15), for supporting the packages, which is arranged in an inlet zone of the packages and a second support (16), for supporting the packages, which is arranged at an outlet zone of the packages, i.e. before and after the support (11, 12, 122, 122) with respect to the movement of the group of packages ((G1, G2, G3, G4).

The first support (15) is advantageously raised with respect to the first support part (11) and to the second support part (12) and the second support part (12) is raised with respect to the second support (16).

If the group of packages (G1, G2, G3, G4) is moved as observable in figure 17, it is preferable for the first support part (11) to be raised with respect to the second support part (12).

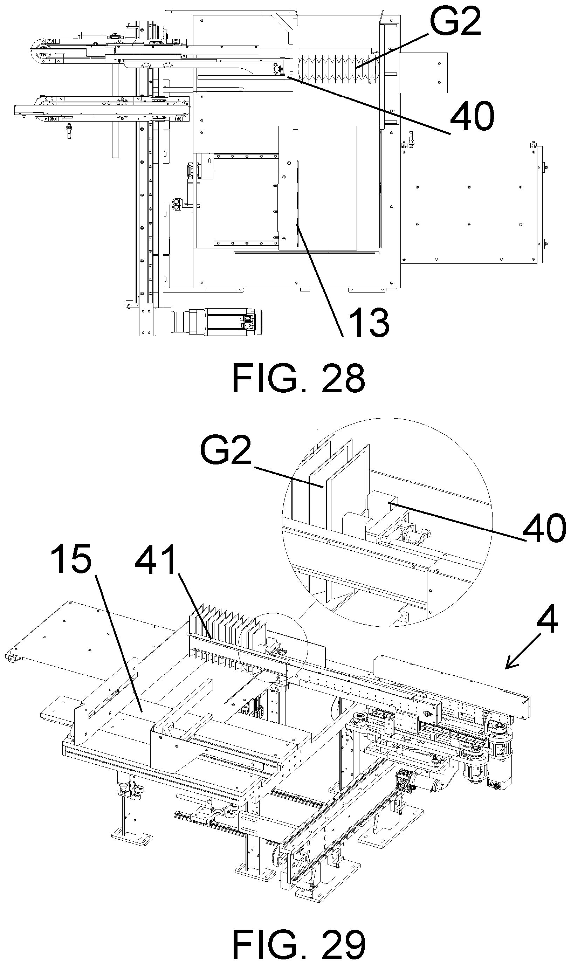

A containing apparatus (10) made in this way facilitates the displacement of the packages in support, without the presence of steps which oppose the movement. As mentioned in the foregoing, the mobility of the first part (21) and the second part (22), as well as modifying the dimensions of the compartment, can enable compacting the packages. Usually it is preferred to avoid the movement of many elements and the risk of deforming the first part (21) and the second part (22), so that the containing apparatus (10) preferably comprises a compactor (40). The compactor (40) is configured to compact the packages of one or more rows, and is movable according to the adjustment direction (R) and moves towards the second part (22) in order to compact, as can be observed by way of example in figure 29. An example of a compactor (40), in the form of a translator-compactor (4) is illustrated in figures from 26 to 29, where, by moving in the adjustment direction (R) after the packages are positioned between the first part (21) and the second part (22), it can proceed to the compacting thereof. The mobility of the compactor (40) in the adjustment direction (R) is observable from a comparison between figure 26 and figure 29; in these figures it can be observed how the compactor (40) and the first part (21) are advantageously conformed so as not to interfere with one another.

As mentioned in the foregoing, the first part (21), the second part (22), the at least a further part (23) and the one or more third parts (24) are usually slim elements, for example strips.

Usually the support (11, 12, 121, 122) itself is made, with a reduced thickness, typically of sheet metal material. The first support part (11) is preferably obtained by processing a slim sheet material so that the thickness thereof is smaller than the height between the upper surface of the first support (15) and the upper surface of the second support part (12).

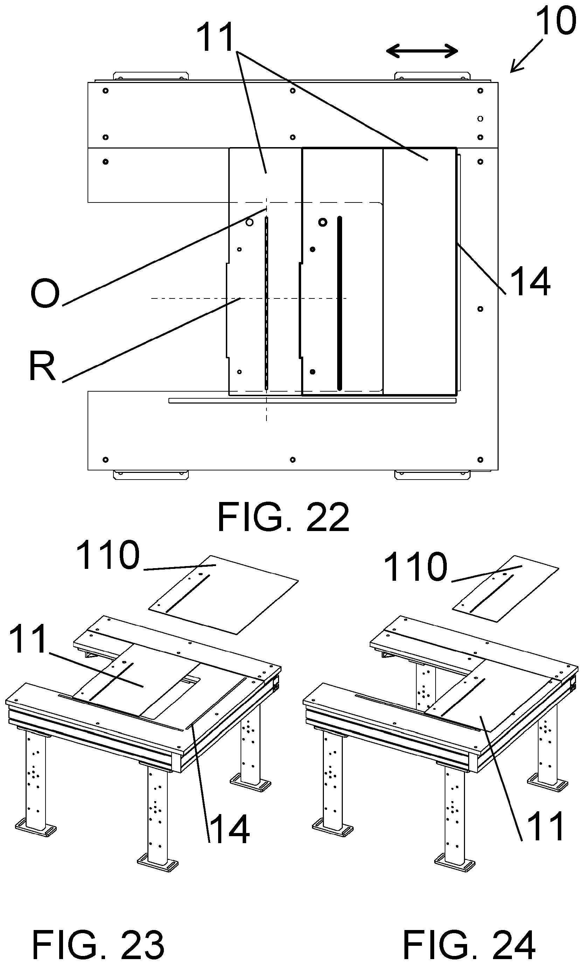

In figure 22 it can be observed how the first support part (11) can move between end positions without removing the support of the group of packages (G1, G2, G3, G4) and without covering the second slot (14). These conditions are illustrated in figures 23 and 24, which also show interchangeable first support parts (110) which allow the containing apparatus can operate for predetermined volumes which the first support part (11) installed cannot process. In figure 23 the first support part (11) has excessively spaced apart from the second support part (12), thus creating a space which cannot support packages, while in figure 24 the first support part (11) covers the second slot (14), thus preventing the movement of the second part (22).

The containing apparatus (10) preferably comprises a first interchangeable support part (110) which is interchangeable with the first support part (11), which is configured alike to the first support part (11) but which has a different length. In particular the first interchangeable support part (110) has an extension between the first slot (13) and the edge facing towards the second slot (14), that is different to the extension of the first support part (11), so as to operate the containing apparatus (10) with different distances between the first part (21) and the second part (22), i.e. between the first slot (13) and the second slot (14). The containing apparatus (10) can comprise connecting means which facilitate the interchangeability, for example figures 30 and 31 show two knobs (33) which allow replacement of the first support part (11).

Figures 30 and 31 give clear views of an embodiment of the movement device (3) and of the first movement means (61). In particular, the pneumatic pistons (6) enable the vertical movement of the first part (21) and the two further parts (23), the motor and the screw which moves the support structure (32) with respect to the linear guide (31) and the perpendicular movement means; the movement means comprise adjustment screws (7) which ensure displacement along the perpendicular direction (O) of the two further parts (23). The first part (21) might also be moved with an adjustment screw (7).

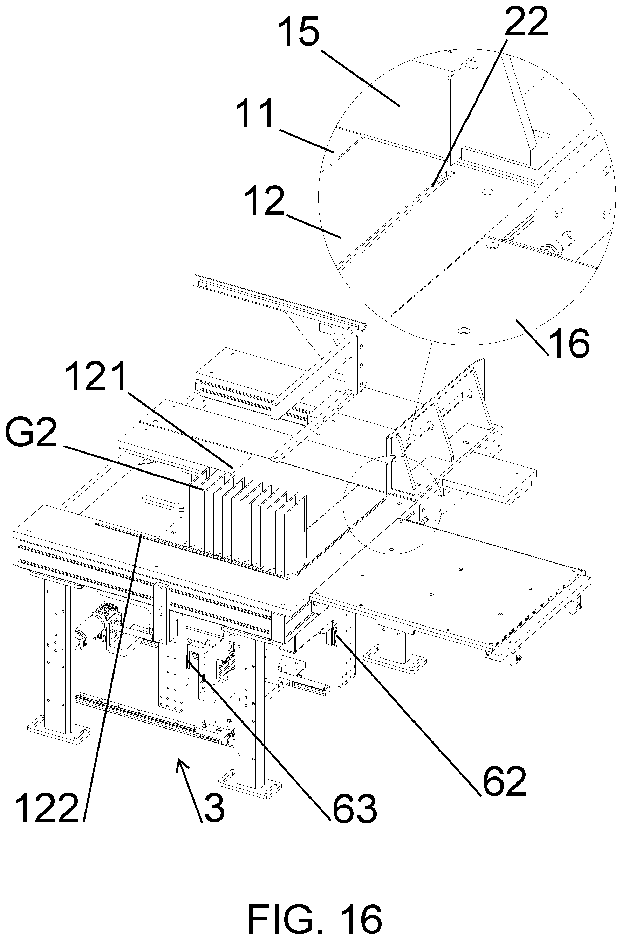

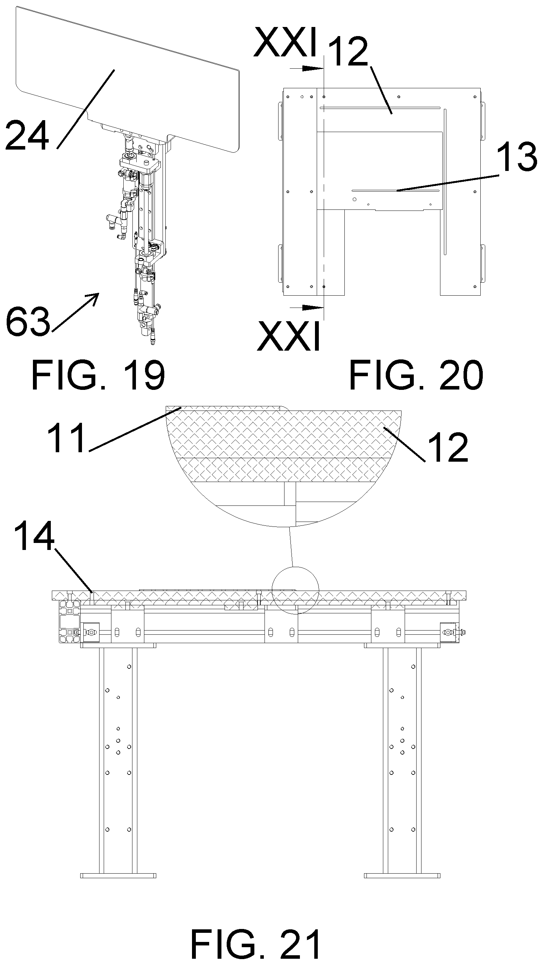

Figure 19 illustrates a possible embodiment of the third movement means (63) which move a third part (24) between the extracted position and the retracted position, and vice versa, and which comprise a linear guide and two pneumatic pistons which move the third part (24) in opposite directions. In the embodiment of figure 16 the second movement means (62) are realised in a like way and are partially illustrated, without the pneumatic pistons. The expert in the sector will understand how the examples included of the first movement means (61), of the second movement means (62) and of the third movement means (63) are not limiting, as they only illustrate a typical realisation in the sector of industrial automation and can be replaced by other actuators of known type, mechanical, hydraulic or electromechanical, usually, but not necessarily, of a linear type.

In this regard it can be seen that some elements, for example the connecting pipes and the supply devices, are not illustrated in the figures to allow a better view of the parts characterising the invention.

Further, the components common to the different embodiments illustrate share the same characteristics.

The invention also relates to a method for arranging a containing apparatus (10) of groups of packages (G1, G2; G3, G4) in transit, with the packages arranged in at least a row, comprising steps of:
- providing a containing apparatus (10) according to the invention;
- receiving one or more items of information relating to a group of packages (G1, G2; G3, G4) in arrival, with the packages arranged in at least a row, such as to define the length of a row of the group of packages (G1, G2; G3, G4) and/or the width of a row of the group of packages (G1, G2, G3, G4);
- moving the first support part (11) and the first part (21) along the adjustment direction (R) and/or moving the first part (21) along the perpendicular direction (O) on the basis of the one or more items of information received;
wherein the movement along the direction (R) adjusts the distance between the first part (21) and the second part (22) to the length of the row and the movement along the perpendicular direction (O) adjusts the position of the first part (21) with respect to the middle of the row, so as to centre it with respect to the package or packages which it contacts.

In other words the method enables adjusting the compartment to the group of packages (G1, G2, G3, G4) that will be processed. Both movements are preferably made, according to the adjustment direction (R) and according to the perpendicular direction (O).

The one or more items of information can change on the basis of the line or the system which serves the containing apparatus (10), for example the length of the row can be supplied, as well as the number of rows and/or the width of the packages in the row.

As can be derived from the description in the foregoing, the method preferably comprises steps of:
- selecting the support part between the first support part (11) and one or more interchangeable first support parts (110) on the basis of one or more items of information received.

It is also possible to replace the second support part (12) instead of the first support part (11), or both, in order to adjust the containing apparatus (10) to the group of packages (G1, G2, G3, G4) which will be processed. In the embodiment of figures 23 and 24, clearly the replacement of the first support part (11) can be carried out by a single operator simply and rapidly.

The invention further relates to a packaging system (100) comprising pick-up and moving means (5) for picking up and moving groups of packages (G1, G2; G3, G4) towards a packaging station (not illustrated), of known type and typically for boxing, and a containing apparatus (10) according to the invention.

Figures from 7 to 9 illustrate examples of boxes (S1, S2, S3) arranged in the packaging station to contain the groups of packages (G1, G2, G3) of figures from 4 to 6.

The pick-up and moving means (5) comprise one or more pairs of abutment parts (52), for abutting packages, and a head (51) which bears the abutment parts (52) and which is movable with respect to the support (11, 12, 121, 122). The abutment parts (52) of each pair of abutment parts (52) are movable with respect to one another between an open position in which they free the packages and a closed position in which they grip the packages. For example, figure 25 illustrates the abutment parts (52) in an open position.

The first movement means (61) and the second movement means (62) are coordinated with the pick-up and moving means (5) so as to move the first part (21) and the second part (22) into a retracted position before the abutment parts are in the closed position. In other words the pick-up and moving means (5) must load the group of packages (G1, G2, G3, G4) before the first part (21) and the second part (22) complete containment thereof.

The packaging system (100) preferably also comprises a translator or a translator-compactor (4), like the one visible in figures from 26 to 29, which moves the group of packages (G1, G2, G3, G4) towards the support (11, 12, 121, 122) and, possibly, can also compact the packages before, for example in the step represented in figure 26, or after the movement.

In the preferred embodiment of the accompanying figures, the translator-compactor (4) comprises a first translator arm (41) which is movable between a retracted position and an extended position in which it flanks a row of packages, according to a parallel direction to the adjustment direction (R). When the first translator arm (41) is in the extended position, the translation along the linear guide arranged according to the perpendicular direction (O) enables the displacement of the group of packages (G1, G2, G3, G4) in the compartment between the first part (21) and the second part (22). The translator-compactor (4) preferably comprises a second translator arm (42) having a similar function to that of the first translator arm (41).

In figure 29 it can be observed how the translator-compactor (4) comprises a compactor (40), also movable according to the adjustment direction (R). Figures from 26 to 29 also allow observation of the movement elements of known type with which the translator-compactor (4) is equipped.

It is understood that the above has been described by way of non-limiting example and that any constructional variants are considered to fall within the protective scope of the present technical solution, as claimed in the following.

## Claims

1. A containing apparatus (10) of groups of packages (G1, G2; G3, G4) in transit, with the packages arranged in at least a row, comprising:
- a support (11, 12, 121, 122), to support a group of packages (G1, G2; G3, G4) with the packages arranged in at least a row, which comprises a first support part (11) having a first slot (13) and a second support part (12) having a second slot (14);
- a first part (21) for contacting packages;
- first movement means (61) which move the first part (21) between an extracted position, in which the first part (21) exits superiorly from the support (11, 12, 121, 122) through the first slot (13), and a retracted position and vice versa;
- a second part (22) for contacting packages;
- second movement means (62) which move the second part (22) between an extracted position, in which the second part (22) exits superiorly from the support (11, 12, 121, 122) through the second slot (14), and a retracted position and vice versa;
wherein:
- the first slot (13) and the second slot (14) are arranged in such a way that the first part (21) and the second part (22) contain, in a predetermined volume at least a row of the group of packages (G1, G2; G3, G4) in the relative extracted positions;
- the first movement means (61) and the second movement means (62) are configured to move the first part (21) and the second part (22) on the basis of the transit of the group of packages (G1, G2; G3, G4);
the containing apparatus (10) being **characterised in that**:
- the first support part (11) is raised with respect to the second support part (12), or vice versa, and the first support part (11) is movable with respect to the second support part (12) according to an adjustment direction (R), between a first position and a second position, so as to vary the distance between the first slot (13) and the second slot (14) on the basis of the predetermined volume;
- the second support part (12) protrudes from the second slot (14) towards the first slot (13) so that the first support part (11) covers the second support part (12), or vice versa, in both the first position and the second position;
- it comprises a movement device (3) which moves the first part (21) and the first support part (11) so that they perform the same displacements along the adjustment direction (R).

2. The containing apparatus (10) of the preceding claim, wherein the support (11, 12, 121, 122) comprises two lateral parts (121, 122) which extend according to the adjustment direction (R) and which are spaced apart from one another, wherein the first support part (11) is raised with respect to the second support part (12) and to the two lateral parts (121, 122) and wherein the first slot (13) is positioned between the two lateral parts (121, 122).

3. The containing apparatus (10) of claim 1 or 2, wherein the movement device (3) comprises a support structure (32), which bears the first part (21), and a linear guide (31) which bears the support structure (32) and which is arranged along the adjustment direction (R), so that the first part (21) is movable in the adjustment direction (R), and wherein the movement of the support structure (32) along the adjustment direction (R) causes the movement of the first support part (11) along the adjustment direction (R).

4. The containing apparatus (10) of claim 3, wherein the support structure (32) bears the first support part (11) so as to move the first support part (11) along the adjustment direction (R).

5. The containing apparatus (10) of claim 3 when dependent on claim 2, wherein the first support part (11) supports on the second support part (12) and on the two lateral parts (121, 122) and has a first thickness (111) at the first slot (13) for contacting the first part (21) and wherein the first part (21) is configured to be internal of the first thickness (111) when the movement device (3) moves the first support part (11), in order to transfer the motion to the first support part (11).

6. The containing apparatus (10) of any one of the preceding claims wherein the first slot (13) extends along a perpendicular direction (O), which is perpendicular to the adjustment direction (R), so as to enable the displacement of the first part (21) in the perpendicular direction (O) and wherein the first part (21) is movable along the perpendicular direction (O).

7. The containing apparatus (10) of the preceding claim, comprising at least a further part (23) for contacting packages which is movable between an extracted position, in which it exits superiorly from the support (11, 12, 121, 122) through the first slot (13), and a retracted position, wherein the at least a further part (23) is movable along the perpendicular direction (O).

8. The containing apparatus (10) of any one of the preceding claims comprising a first support (15), for supporting the packages, which is arranged in an inlet zone of the packages and a second support (16), for supporting the packages, which is arranged at an outlet zone of the packages, wherein:
- the first support (15) is raised with respect to the first support part (11) and to the second support part (12);
- the second support part (12) is raised with respect to the second support (16).

9. The containing apparatus (10) of any one of the preceding claims comprising a compactor (40), for compacting the packages of one or more rows, which is movable according to the adjustment direction (R) and which moves towards the second part (22) in order to compact the packages.

10. The containing apparatus (10) of any one of the preceding claims comprising a first interchangeable support part (110) which is interchangeable with the first support part (11), which is configured alike to the first support part (11) and which has a different extension with respect to the first support part (11) between the first slot (13) and the edge facing towards the second slot (14), so as to operate the containing apparatus (10) with different distances between the first slot (13) and the second slot (14).

11. A method for arranging a containing apparatus (10) of groups of packages (G1, G2; G3, G4) in transit, with the packages arranged in at least a row, comprising steps of:
- providing a containing apparatus (10) according to any one of the preceding claims;
- receiving one or more items of information relating to a group of packages (G1, G2; G3, G4) in arrival, with the packages arranged in at least a row, such as to define the length of a row of the group of packages (G1, G2; G3, G4) and/or the width of a row of the group of packages (G1, G2; G3, G4);
- moving the first support part (11) and the first part (21) along the adjustment direction (R) and/or moving the first part (21) along the perpendicular direction (O) on the basis of the one or more items of information received;
wherein the movement along the adjustment direction (R) adjusts the distance between the first part (21) and the second part (22) to the length of the row and the movement along the perpendicular direction (O) adjusts the position of the first part (21) with respect to the middle of the row.

12. A packaging system (100) comprising pick-up and moving means (5) for picking up and moving groups of packages (G1, G2; G3, G4) towards a packaging station and a containing apparatus (10) according to any one of claims from 1 to 10, wherein:
the pick-up and moving means (5) comprise one or more pairs of abutment parts (52), for abutting packages, and a head (51) which bears the abutment parts (52) and which is movable with respect to the support (11, 12, 121, 122), the abutment parts (52) of each pair of abutment parts (52) being movable with respect to one another between an open position in which they free the packages and a closed position in which they grip the packages;
- the first movement means (61) and the second movement means (62) are coordinated with the pick-up and moving means (5) so as to move the first part (21) and the second part (22) into a retracted position before the abutment parts are in the closed position.

## Patentansprüche

1. Aufnahmevorrichtung (10) für durchlaufende Gruppen von Packungen (G1, G2; G3, G4), wobei die Packungen in zumindest einer Reihe angeordnet sind, umfassend:
- eine Auflage (11, 12, 121, 122) zum Tragen einer Gruppe von Packungen (G1, G2; G3, G4), wobei die Packungen in zumindest einer Reihe angeordnet sind, umfassend einen ersten Auflageteil (11), der einen ersten Schlitz (13) aufweist, und einen zweiten Auflageteil (12), der einen zweiten Schlitz (14) aufweist,
- einen ersten Teil (21) für den berührenden Kontakt mit Packungen,
- erste Bewegungsmittel (61) zum Bewegen des ersten Teils (21) zwischen einer ausgefahrenen Stellung, in welcher der erste Teil (21) durch den ersten Schlitz (13) hindurch oben von der Auflage (11, 12, 121, 122) austritt, und einer eingefahrenen Stellung und umgekehrt,
- einen zweiten Teil (22) für den berührenden Kontakt mit Packungen,
- zweite Bewegungsmittel (62) zum Bewegen des zweiten Teils (22) zwischen einer ausgefahrenen Stellung, in welcher der zweite Teil (22) durch den zweiten Schlitz (14) hindurch oben von der Auflage (11, 12, 121, 122) austritt, und einer eingefahrenen Stellung und umgekehrt,
wobei:
- der erste Schlitz (13) und der zweite Schlitz (14) derart angeordnet sind, dass der erste Teil (21) und der zweite Teil (22), in einem vorbestimmten Volumen, zumindest eine Reihe der Gruppe von Packungen (G1, G2; G3, G4) in den entsprechenden ausgefahrenen Stellungen aufnehmen;
- die ersten Bewegungsmittel (61) und die zweiten Bewegungsmittel (62) konfiguriert sind, um den ersten Teil (21) und den zweiten Teil (22) auf Grundlage des Durchlaufs der Gruppen von Packungen (G1, G2; G3, G4) zu bewegen,
wobei die Aufnahmevorrichtung (10) **dadurch gekennzeichnet ist, dass**:
- der erste Auflageteil (11) in Bezug auf den zweiten Auflageteil (12) erhöht ist, oder umgekehrt, und der erste Auflageteil (11) in Bezug auf den zweiten Auflageteil (12) entlang einer Einstellrichtung (R) bewegbar ist zwischen einer ersten Stellung und einer zweiten Stellung, um den Abstand zwischen dem ersten Schlitz (13) und dem zweiten Schlitz (14) auf Grundlage des vorbestimmten Volumens zu variieren;
- der zweite Auflageteil (12) von dem zweiten Schlitz (14) zu dem ersten Schlitz (13) hin hervorsteht, so dass der erste Auflageteil (11) den zweiten Auflageteil (12) bedeckt, oder umgekehrt, sowohl in der ersten Stellung als auch in der zweiten Stellung,
- sie eine Bewegungsvorrichtung (3) umfasst, die den ersten Teil (21) und den ersten Auflageteil (11) derart bewegt, dass sie dieselben Bewegungen entlang der Einstellrichtung (R) ausführen.

2. Aufnahmevorrichtung (10) nach dem vorhergehenden Anspruch, wobei die Auflage (11, 12, 121, 122) zwei seitliche Teile (121, 122) umfasst, die sich entlang der Einstellrichtung (R) erstrecken und die voneinander beabstandet sind, wobei der erste Auflageteil (11) in Bezug auf den zweiten Auflageteil (12) und auf die zwei seitlichen Teile (121, 122) erhöht ist und wobei der erste Schlitz (13) zwischen den zwei seitlichen Teilen (121, 122) angeordnet ist.

3. Aufnahmevorrichtung (10) nach Anspruch 1 oder 2, wobei die Bewegungsvorrichtung (3) eine Trägerstruktur (32) umfasst, die den ersten Teil (21) trägt, und eine Linearführung (31) umfasst, welche die Trägerstruktur (32) trägt und entlang der Einstellrichtung (R) angeordnet ist, so dass der erste Teil (21) in der Einstellrichtung (R) bewegbar ist, und wobei die Bewegung der Trägerstruktur (32) entlang der Einstellrichtung (R) die Bewegung des ersten Auflageteils (11) entlang der Einstellrichtung (R) bewirkt.

4. Aufnahmevorrichtung (10) nach Anspruch 3, wobei die Trägerstruktur (32) den ersten Auflageteil (11) trägt, um den ersten Auflageteil (11) entlang der Einstellrichtung (R) zu bewegen.

5. Aufnahmevorrichtung (10) nach Anspruch 3, sofern von Anspruch 2 abhängig, wobei der erste Auflageteil (11) auf dem zweiten Auflageteil (12) und auf den zwei seitlichen Teilen (121, 122) aufliegt und eine erste Dicke (111) an dem ersten Schlitz (13) aufweist, um in berührenden Kontakt mit dem ersten Teil (21) zu gelangen, und wobei der erste Teil (21) dafür konfiguriert ist, sich innerhalb der ersten Dicke (111) zu befinden, wenn die Bewegungsvorrichtung (3) den ersten Auflageteil (11) bewegt, um die Bewegung auf den ersten Auflageteil (11) zu übertragen.

6. Aufnahmevorrichtung (10) nach einem der vorhergehenden Ansprüche, wobei der erste Schlitz (13) sich entlang einer orthogonalen Richtung (0) erstreckt, die orthogonal zur Einstellrichtung (R) ist, um die Bewegung des ersten Teils (21) in der orthogonalen Richtung (0) zu ermöglichen, und wobei der erste Teil (21) entlang der orthogonalen Richtung (0) bewegbar ist.

7. Aufnahmevorrichtung (10) nach dem vorhergehenden Anspruch, umfassend zumindest einen weiteren Teil (23) für den berührenden Kontakt mit Packungen, der bewegbar ist zwischen einer ausgefahrenen Stellung, in der er durch den ersten Schlitz (13) hindurch oben von der Auflage (11, 12, 121, 122) austritt, und einer eingefahrenen Stellung, in welcher der zumindest eine weitere Teil (23) entlang der orthogonalen Richtung (0) bewegbar ist.

8. Aufnahmevorrichtung (10) nach einem der vorhergehenden Ansprüche, umfassend eine erste Auflage (15) zum Tragen der Packungen, die in einem Einlassbereich für die Packungen angeordnet ist, und eine zweite Auflage (16) zum Tragen der Packungen, die in einem Auslassbereich für die Packungen angeordnet ist, wobei:
- die erste Auflage (15) in Bezug auf den ersten Auflageteil (11) und auf den zweiten Auflageteil (12) erhöht ist;
- der zweite Auflageteil (12) in Bezug auf die zweite Auflage (16) erhöht ist.

9. Aufnahmevorrichtung (10) nach einem der vorhergehenden Ansprüche, umfassend einen Kompaktor (40), zum Kompaktieren der Packungen einer oder mehrerer Reihen, der entlang der Einstellrichtung (R) bewegbar ist und der sich zum zweiten Teil (22) hin bewegt, um die Packungen zu kompaktieren.

10. Aufnahmevorrichtung (10) nach einem der vorhergehenden Ansprüche, umfassend einen ersten austauschbaren Auflageteil (110), der mit dem ersten Auflageteil (11) austauschbar ist, der ähnlich dem ersten Auflageteil (11) konfiguriert ist und der eine andere Erstreckung zwischen dem ersten Schlitz (13) und der dem zweiten Schlitz (14) zugewandten Kante aufweist als der erste Auflageteil (11), so dass die Aufnahmevorrichtung (10) mit unterschiedlichen Abständen zwischen dem ersten Schlitz (13) und dem zweiten Schlitz (14) betrieben werden kann.

11. Verfahren zum Anordnen einer Aufnahmevorrichtung (10) für durchlaufende Gruppen von Packungen (G1, G2; G3, G4), wobei die Packungen in zumindest einer Reihe angeordnet sind, folgende Schritte umfassend:
- Bereitstellen einer Aufnahmevorrichtung (10) nach einem der vorhergehenden Ansprüche,
- Empfangen von einem oder mehreren Informationselementen in Bezug auf eine ankommende Gruppe von Packungen (G1, G2; G3, G4), wobei die Packungen in zumindest einer Reihe angeordnet sind, um die Länge einer Reihe der Gruppe von Packungen (G1, G2; G3, G4) und/oder die Breite einer Reihe der Gruppe von Packungen (G1, G2; G3, G4) zu definieren;
- Bewegen des ersten Auflageteils (11) und des ersten Teils (21) entlang der Einstellrichtung (R) und/oder Bewegen des ersten Teils (21) entlang der orthogonalen Richtung (0) auf Grundlage des einen oder der mehreren empfangenen Informationselemente;
wobei die Bewegung entlang der Einstellrichtung (R) dazu dient, den Abstand zwischen dem ersten Teil (21) und dem zweiten Teil (22) entsprechend der Länge der Reihe einzustellen, und die Bewegung entlang der orthogonalen Richtung (0) dazu dient, die Stellung des ersten Teils (21) in Bezug auf die Mitte der Reihe einzustellen.

12. Verpackungssystem (100), umfassend Greif- und Bewegungsmittel (5) zum Greifen und Bewegen von Gruppen von Packungen (G1, G2; G3, G4) zu einer Verpackungsstation und eine Aufnahmevorrichtung (10) nach einem der Ansprüche von 1 bis 10, wobei:
- die Greif- und Bewegungsmittel (5) ein oder mehrere Paare von Anschlagteilen (52), die als Anschlag für die Packungen dienen, und einen Kopf (51) umfassen, der die Anschlagteile (52) trägt und der in Bezug auf die Auflage (11, 12, 121, 122) bewegbar ist, wobei die Anschlagteile (52) jedes Paares von Anschlagteilen (52) relativ zueinander bewegbar sind zwischen einer geöffneten Stellung, in der sie die Packungen freigeben, und einer geschlossenen Stellung, in der sie die Packungen greifen;
- die ersten Bewegungsmittel (61) und die zweiten Bewegungsmittel (62) derart mit den Greif- und Bewegungsmitteln (5) koordiniert sind, dass sie den ersten Teil (21) und den zweiten Teil (22) in eine eingefahrene Stellung bewegen, bevor sich die Anschlagteile in der geschlossenen Stellung befinden.

## Revendications

1. Un appareil de confinement (10) de groupes d'emballages (G1, G2 ; G3, G4) en transit, avec les emballages disposés en au moins une file, comprenant :
- un appui (11, 12, 121, 122), pour supporter un groupe d'emballages (G1, G2 ; G3, G4) avec les emballages disposés en au moins une file, qui comprend une première partie d'appui (11) ayant une première fente (13) et une deuxième partie d'appui (12) ayant une deuxième fente (14) ;
- une première partie (21) de contact avec des emballages ;
- des premiers moyens de déplacement (61) qui déplacent la première partie (21) entre une position sortie, dans laquelle la première partie (21) sort supérieurement de l'appui (11, 12, 121, 122) à travers la première fente (13), et une position rentrée et inversement ;
- une deuxième partie (22) de contact avec des emballages ;
- des deuxièmes moyens de déplacement (62) qui déplacent la deuxième partie (22) entre une position sortie, dans laquelle la deuxième partie (22) sort supérieurement de l'appui (11, 12, 121, 122) à travers la deuxième fente (14), et une position rentrée et inversement ;
dans lequel :
- la première fente (13) et la deuxième fente (14) sont disposées de manière à ce que la première partie (21) et la deuxième partie (22) contiennent, dans un volume prédéfini, au moins une file du groupe d'emballages (G1, G2 ; G3, G4) dans les positions sorties correspondantes ;
- les premiers moyens de déplacement (61) et les deuxièmes moyens de déplacement (62) sont configurés pour déplacer la première partie (21) et la deuxième partie (22) en fonction du transit du groupe d'emballages (G1, G2 ; G3, G4) ;
l'appareil de confinement (10) étant **caractérisé en ce que** :
- la première partie d'appui (11) est surélevée par rapport à la deuxième partie d'appui (12), ou inversement, et la première partie d'appui (11) est mobile par rapport à la deuxième partie d'appui (12) selon une direction de réglage (R), entre une première position et une deuxième position, de manière à faire varier la distance entre la première fente (13) et la deuxième fente (14) en fonction du volume prédéfini ;
- la deuxième partie d'appui (12) dépasse de la deuxième fente (14) vers la première fente (13) de sorte que la première partie d'appui (11) couvre la deuxième partie d'appui (12), ou inversement, à la fois dans la première position et dans la deuxième position ;
- il comprend un dispositif de déplacement (3) qui déplace la première partie (21) et la première partie d'appui (11) de manière à ce qu'elles effectuent les mêmes déplacements le long de la direction de réglage (R) .

2. L'appareil de confinement (10) selon la revendication précédente, dans lequel l'appui (11, 12, 121, 122) comprend deux parties latérales (121, 122) qui s'étendent selon la direction de réglage (R) et qui sont espacées l'une de l'autre, dans lequel la première partie d'appui (11) est surélevée par rapport à la deuxième partie d'appui (12) et aux deux parties latérales (121, 122) et dans lequel la première fente (13) est positionnée entre les deux parties latérales (121, 122).

3. L'appareil de confinement (10) selon la revendication 1 ou 2, dans lequel le dispositif de déplacement (3) comprend une structure de support (32), qui porte la première partie (21), et un guide linéaire (31) qui porte la structure de support (32) et qui est disposé le long de la direction de réglage (R), de sorte que la première partie (21) est mobile dans la direction de réglage (R), et dans lequel le déplacement de la structure de support (32) le long de la direction de réglage (R) détermine le déplacement de la première partie d'appui (11) le long de la direction de réglage (R) .

4. L'appareil de confinement (10) selon la revendication 3, dans lequel la structure de support (32) porte la première partie d'appui (11) de manière à déplacer la première partie d'appui (11) le long de la direction de réglage (R).

5. L'appareil de confinement (10) selon la revendication 3 quand dépendant de la revendication 2, dans lequel la première partie d'appui (11) repose sur la deuxième partie d'appui (12) et sur les deux parties latérales (121, 122) et a une première épaisseur (111) au niveau de la première fente (13) pour venir en contact avec la première partie (21) et dans lequel la première partie (21) est configurée pour être à l'intérieur de la première épaisseur (111) lorsque le dispositif de déplacement (3) déplace la première partie d'appui (11) pour transférer le mouvement à la première partie d'appui (11) .

6. L'appareil de confinement (10) selon l'une quelconque des revendications précédentes, dans lequel la première fente (13) s'étend le long d'une direction perpendiculaire (O), qui est perpendiculaire à la direction de réglage (R), de manière à permettre le déplacement de la première partie (21) dans la direction perpendiculaire (O), et dans lequel la première partie (21) est mobile le long de la direction perpendiculaire (O).

7. L'appareil de confinement (10) selon la revendication précédente, comprenant au moins une autre partie (23) de contact avec des emballages qui est mobile entre une position sortie, dans laquelle elle sort supérieurement de l'appui (11, 12, 121, 122) à travers la première fente (13), et une position rentrée, dans laquelle ladite au moins une autre partie (23) est mobile le long de la direction perpendiculaire (O).

8. L'appareil de confinement (10) selon l'une quelconque des revendications précédentes, comprenant un premier appui (15), pour supporter les emballages, qui est disposé dans une zone d'entrée des emballages et un deuxième appui (16), pour supporter les emballages, qui est disposé au niveau d'une zone de sortie des emballages, dans lequel :
- le premier appui (15) est surélevé par rapport à la première partie d'appui (11) et à la deuxième partie d'appui (12) ;
- la deuxième partie d'appui (12) est surélevée par rapport au deuxième appui (16).

9. L'appareil de confinement (10) selon l'une quelconque des revendications précédentes, comprenant un compacteur (40), pour compacter les emballages d'une ou plusieurs files, qui est mobile selon la direction de réglage (R) et qui se déplace vers la deuxième partie (22) afin de compacter les emballages.

10. L'appareil de confinement (10) selon l'une quelconque des revendications précédentes, comprenant une première partie d'appui interchangeable (110) qui est interchangeable avec la première partie d'appui (11), qui est configurée comme la première partie d'appui (11) et qui a une extension différente par rapport à la première partie d'appui (11) entre la première fente (13) et le bord orienté vers la deuxième fente (14), de manière à faire fonctionner l'appareil de confinement (10) avec différentes distances entre la première fente (13) et la deuxième fente (14).

11. Un procédé de mise en place d'un appareil de confinement (10) de groupes d'emballages (G1, G2 ; G3, G4) en transit, avec les emballages disposés en au moins une file, comprenant les étapes consistant à :
- fournir un appareil de confinement (10) selon l'une quelconque des revendications précédentes ;
- recevoir une ou plusieurs informations relatives à un groupe d'emballages (G1, G2 ; G3, G4) qui arrive, avec les emballages disposés en au moins une file, de manière à définir la longueur d'une file du groupe d'emballages (G1, G2 ; G3, G4) et/ou la largeur d'une file du groupe d'emballages (G1, G2 ; G3, G4) ;
- déplacer la première partie d'appui (11) et la première partie (21) le long de la direction de réglage (R) et/ou déplacer la première partie (21) le long de la direction perpendiculaire (0) en fonction desdites une ou plusieurs informations reçues ;
dans lequel le déplacement le long de la direction de réglage (R) ajuste la distance entre la première partie (21) et la deuxième partie (22) à la longueur de la file et le déplacement le long de la direction perpendiculaire (0) ajuste la position de la première partie (21) par rapport au milieu de la file.

12. Un système d'emballage (100) comprenant des moyens de prélèvement et de déplacement (5) pour prélever et déplacer des groupes d'emballages (G1, G2 ; G3, G4) vers une station d'emballage et un appareil de confinement (10) selon l'une quelconque des revendications de 1 à 10, dans lequel :
- les moyens de prélèvement et de déplacement (5) comprennent une ou plusieurs paires d'éléments de butée (52), pour rencontrer des emballages, et une tête (51) qui porte les éléments de butée (52) et qui est mobile par rapport à l'appui (11, 12, 121, 122), les éléments de butée (52) de chaque paire d'éléments de butée (52) étant mobiles l'un par rapport à l'autre entre une position ouverte dans laquelle ils libèrent les emballages et une position fermée dans laquelle ils saisissent les emballages ;
- les premiers moyens de déplacement (61) et les deuxièmes moyens de déplacement (62) sont coordonnés avec les moyens de prélèvement et de déplacement (5) de manière à déplacer la première partie (21) et la deuxième partie (22) dans une position rentrée avant que les éléments de butée soient dans la position fermée.
